# EUROPÄISCHE PATENTSCHRIFT

(11) **EP 0 878 123 B1**
(45) Veröffentlichungstag und Bekanntmachung des Hinweises auf die Patenterteilung: **01.06.2005**
(21) Anmeldenummer: 98108318.1
(22) Anmeldetag: 07.05.1998
(51) Int. Cl.: A01F 29/20

(54) **Schneidleiste**
Shear bar
Contre-couteau

(30) Priorität: 16.05.1997 AT 84397
(43) Veröffentlichungstag der Anmeldung: 18.11.1998
(73) Patentinhaber: Busatis GmbH, 3251 Purgstall (AT)
(72) Erfinder:
(74) Vertreter: Puchberger, Peter, Dipl.-Ing.

(56) Entgegenhaltungen:
- AT-B- 398 509
- DE-A- 3 734 781
- DE-U- 8 700 403
- DE-U- 8 703 479
- GB-A- 2 264 033
- US-A- 2 033 594
- US-A- 3 045 934
- US-A- 3 635 271
- US-A- 3 805 660

## Beschreibung

Die Erfindung betrifft eine Schneidleiste bestehend aus einem Schneidenkörper mit mindestens einer eine Schneidkante aufweisenden Hartstoffleiste.

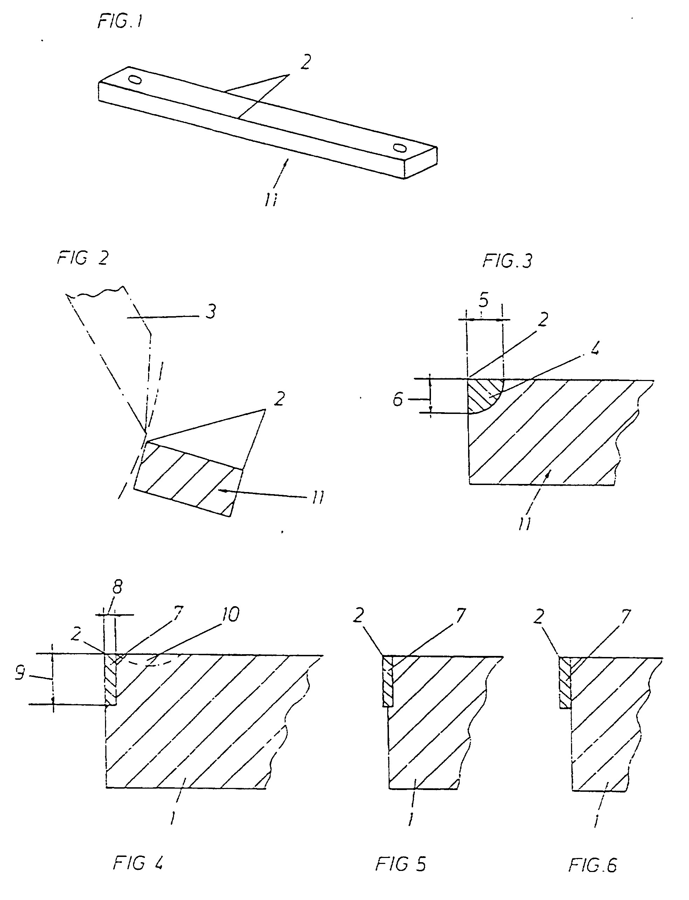

Zur Zerkleinerung von Futterpflanzen werden Maschinen - sogenannte Häcksler - eingesetzt, die, wie in Fig. 2 dargestellt, mit einem sich drehenden Schneidkopf, auf dem Messer 3 montiert sind, ausgestattet sind. Die Futterpflanzen werden durch einen Zufuhrkanal dem Schneidwerk zugeführt. Im Schnittbereich der Messer werden die Futterpflanzen von einer Schneidkante 2, die sich in nur minimalem Abstand von dem Messer 3 befindet, gehalten. Diese Schneidkante 2 muß scharfkantig sein und einen minimalen Abstand vom Messer aufweisen, da sonst der Kraftaufwand für das Schneiden ansteigt, die Gleichmäßigkeit der Schnittlänge verloren geht und sich nicht geschnittene Teile um diese Schneidkante legen. Ein Nachschärfen der Schneidkanten ist sehr schwierig, kostenaufwendig und verringert die Einsatzzeit in der begrenzten Erntesaison. Deshalb werden bei Hochleistungsmaschinen die Schneidkanten dieser Schneidleisten in besonders verschleißfester Ausführung, z.B. durch Aufbringen von Hartschichten, ausgeführt. Solche Schneidleisten mit dünnen, sehr verschleißfesten Schichten sind z.B. aus der AT-PS 398 509 (Busatis) bekannt. Sie haben den Vorteil, daß durch ihre sehr geringe Dicke das dahinterliegende, weichere Grundmaterial schneller abgetragen wird und sich ein Selbstschärfeffekt einstellt.

Beim Schnittgut vermischt mit harten Anteilen, z.B. Steinen, wie dies bei der Ernte von Gras auftritt, hat sich diese Lösung nicht bewährt, da die Schneidkante durch Schläge ausbricht.

Daher werden für die Grasernte Schneidleisten gemäß Fig. 3 eingesetzt, die eine massiv aufgeschweißte Schneidkante 4 aus einem hartzähen Material, z.B. Schnellarbeitsstahl ähnlich WSt Nr. 13243, besitzen. Diese Kanten ergeben keinen Selbstschärfeffekt, da das Maß 5 über 3,5 mm beträgt, und werden verhältnismäßig schnell rund. Dadurch steigt der zum Schneiden erforderliche Kraftaufwand, die Schnittqualität sinkt und die Schneidkanten müssen relativ schnell ersetzt werden.

Die Erfindung setzt sich zum Ziel, eine Schneidkante zu finden, die so dünn (Maß 5) ausgeführt werden kann, daß ein Selbstschärfeffekt durch Abtragen des Grundmaterials ermöglicht wird und die Schneidkante bei Schlägen trotzdem nicht ausbricht.

Erfindungsgemäß wird dies dadurch erreicht, daß die Hartstoffleiste aus einer zähen Matrix mit darin eingelagerten Hartstoffpartikeln besteht und auf den Schneidenkörper aufgeschweißt ist. Die erfindungsgemäße Schneidleiste hat den erforderlichen Verschleißwiderstand dadurch, daß die Hartstoffpartikel eine Härte von >1800 HV aufweisen und in ausreichender Anzahl und Größe in der Hartstoffleiste gleichmäßig verteilt enthalten sind, und die hohe Schlagfestigkeit durch eine zähe Matrix, die durch die Hartstoffe vor dem Auswaschen geschützt ist.

Gemäß einer bevorzugten Ausführungsform der Erfindung hat die Matrix eine Härte von maximal 600 HV, vorzugsweise 480 bis 580 HV. Sie besteht erfindungsgemäß aus einer Kombination von zwei oder mehreren der chemischen Elemente, Nickel, Silicium, Kohlenstoff und Bor.

Vorzugsweise haben die Hartstoffpartikel eine Härte von >1800 HV. Die resultierende Härte der Hartstoffleiste ist damit ähnlich groß. Nach einer besonderen Ausführungsform sind die Hartstoffpartikel Wolframschmelzkarbide. Der Anteil der Hartstoffpartikel in der Hartstoffleiste ist vorzugsweise größer 50 Gew.%. Der Flächenanteil der Hartstoffpartikel mit einem Durchmesser von 40 bis 160 µm im Schliffbild der Hartstoffleiste ist vorzugsweise mindestens 30% und die Hartstoffpartikel sind bevorzugt in der Matrix gleichmäßig verteilt. Bei einer Partikelgröße der Hartstoffe zwischen 40 - 160 µm ist der Effekt gegeben, daß das Ausbrechen der Partikel vermieden wird. Bei den bevorzugten Mengenverhältnissen und Gleichverteilung wird ein Aushöhlen des Matrixmaterial zwischen den Partikel und damit deren Ausbrechen gering gehalten, sodaß die Hartstoffpartikel den Verschleißwiderstand der Hartstoffleiste bestimmen.

Nach einer besonderen Ausführungsform der Erfindung hat die Hartstoffleiste eine Dicke 8 von 2 bis 3,5 mm. Dies ist dünn genug, daß das angrenzende Grundmaterial abgetragen werden kann und ein Selbstschärfeffekt der Schneidkante stattfindet. Ferner ist die Hartstoffleiste vorzugsweise seitlich am Schneidenkörper aufgeschweißt und sie hat bevorzugt eine Breite 9 von mindestens 6 mm. Unterhalb kommt es dadurch im Grundmaterial zu keiner nennenswerten Abtragung mehr, sodaß dort die Substanz und Stabilität der Schneidleiste erhalten bleibt.

Nach einer besonderen Ausführungsform der Erfindung ist die Hartstoffleiste durch Auftragsschweißen am Schneidenkörper aufgeschweißt und sie weist eine Haftzugfestigkeit von mehr als 100 N/mm² auf.

Bei der Verwendung der erfindungsgemäßen Schneidleiste bei der Grasernte ergibt sich eine Verlängerung der Standzeit auf das Zwei- bis Dreifache der bisher bekannten Grasschneidleisten.

In den beiliegenden Zeichnungen zeigt Fig. 1 eine Schneidleiste 11 mit ihren Schneidkanten 2, wie sie als Gegenschneide in einem Häcksler montiert sein kann. Die Fig. 2 zeigt eine Schneidleiste 11 mit ihren Schneidkanten 2 und ein Messer 3, welches durch Rotation an der Schneidleiste 11 vorbeibewegt wird. Fig. 3 zeigt eine Grasschneidleiste gemäß dem Stand der Technik. Die Fig. 4, 5 und 6 zeigen mehrere Ausführungsvarianten der erfindungsgemäßen Schneidleiste.

In Fig. 4 ist die aus einer zähen Matrix mit darin eingelagerten Hartstoffpartikel bestehende Hartstoffleiste 7 in eine Ausnehmung des aus weicherem Grundmaterial bestehenden Schneidenkörpers 1 eingesetzt, so daß die die Schneidkante 2 bildenden Oberflächen der Hartstoffleiste 7 mit den Oberflächen des Schneidenkörpers 1 fluchten. Durch den höheren Abrieb des weichen Materials des Schneidenkörpers 1 entsteht beim Einsatz der Schneidleiste eine Vertiefung 10 im Grundmaterial unmittelbar an die Dicke 8 der Hartstoffleiste 7 angrenzend und es ergibt sich ein Selbstschärfeffekt für die Schneidkante 2. Das an die Breite 9 der Hartstoffleiste 7 angrenzende Grundmaterial wird aufgrund der ausreichenden Ausmaße der Breite 9 nicht nennenswert abgetragen. Die Hartstoffleiste 7 kann z.B. mittels Plasmaauftragsschweißen an den Schneidenkörper 1 angeschweißt sein.

Die Hartstoffleiste 7 kann auch wie in Fig. 5 nur zum Teil in den Schneidenkörper 1 eingesetzt oder wie in Fig. 6 auf den Schneidenkörper 1 aufgesetzt sein. Es ist nicht unbedingt notwendig, daß die Hartstoffbeschichtung seitlich zur Schneidkante 2 angeordnet ist, sondern in gleicher Weise läßt sich die Hartstoffbeschichtung auch an der Oberseite des Schneidenkörpers 1 vorsehen.

## Patentansprüche

1. Schneidleiste bestehend aus einem Schneidenkörper (1) mit mindestens einer eine Schneidkante (2) aufweisenden auf den Schneidenkörper (1) aufgeschweißten Hartstoffleiste (7) aus einer zähen Matrix mit darin eingelagerten Hartstoffpartikeln, **dadurch gekennzeichnet, dass** der Flächenanteil der Hartstoffpartikel mit einem Durchmesser von 40 - 160 µm im Schliffbild der Hartstoffleiste (7) mindestens 30% ist.

2. Schneidleiste nach Anspruch 1, **dadurch gekennzeichnet, daß** die Matrix eine Härte von maximal 600 HV, vorzugsweise 480 - 580 HV, aufweist.

3. Schneidleiste nach Anspruch 1 oder 2, **dadurch gekennzeichnet, daß** die Matrix aus einer Kombination von zwei oder mehreren der chemischen Elemente, Nickel, Silicium, Kohlenstoff und Bor, besteht.

4. Schneidleiste nach Anspruch 1, 2 oder 3, **dadurch gekennzeichnet, daß** die Hartstoffpartikel eine Härte von größer 1800 HV aufweisen.

5. Schneidleiste nach Anspruch 4, **dadurch gekennzeichnet, daß** die Hartstoffpartikel Wolframschmelzkarbide sind.

6. Schneidleiste nach einem der vorhergehenden Ansprüche, **dadurch gekennzeichnet, daß** der Anteil der Hartstoffpartikel in der Hartstoffleiste (7) größer 50 Gew.% ist.

7. Schneidleiste nach einem der vorhergehenden Ansprüche, **dadurch gekennzeichnet, daß** die Hartstoffpartikel in der Matrix gleichmäßig verteilt sind.

8. Schneidleiste nach einem der vorhergehenden Ansprüche, **dadurch gekennzeichnet, daß** die Hartstoffleiste (7) eine Dicke (8) von 2 bis 3,5 mm aufweist.

9. Schneidleiste nach einem der vorhergehenden Ansprüche, **dadurch gekennzeichnet, daß** die Hartstoffleiste (7) seitlich am Schneidenkörper (1) aufgeschweißt ist.

10. Schneidleiste nach einem der vorhergehenden Ansprüche, **dadurch gekennzeichnet, daß** die Hartstoffleiste (7) eine Breite (9) von mindestens 6 mm hat.

11. Schneidleiste nach einem der vorhergehenden Ansprüche, **dadurch gekennzeichnet, daß** die Hartstoffleiste (7) durch Auftragsschweißen am Schneidenkörpers (1) aufgeschweißt ist.

12. Schneidleiste nach einem der vorhergehenden Ansprüche, **dadurch gekennzeichnet, daß** die Hartstoffleiste (7) eine Haftungsfestigkeit von mehr als 100 N/mm2 aufweist.

13. Schneidleiste nach einem der vorhergehenden Ansprüche, **dadurch gekennzeichnet, daß** die Hartstoffleiste (7) auf der Oberseite am Schneidenkörper (1) aufgeschweißt ist.

## Claims

1. Cutting strip consisting of a cutting body (1) having at least one hard-material strip (7) that has a cutting edge (2) and is welded onto the cutting body (1) and consists of a tough matrix with hard-material particles incorporated therein, **characterised in that** the surface proportion of hard-material particles with a diameter of 40 - 160 µm in a polished section of the hard-material strip (7) is at least 30%.

2. Cutting strip according to claim 1, **characterised in that** the matrix has a hardness of at most 600 HV, preferably 480 - 580 HV.

3. Cutting strip according to claim 1 or 2, **characterised in that** the matrix consists of a combination of two or more of the chemical elements nickel, silicon, carbon and boron.

4. Cutting strip according to claim 1, 2 or 3, **characterised in that** the hard-material particles have a hardness that is greater than 1800 HV.

5. Cutting strip according to claim 4, **characterised in that** the hard-material particles are tungsten-fused carbides.

6. Cutting strip according to one of the preceding claims, **characterised in that** the proportion of hard-material particles in the hard-material strip (7) is greater than 50% by weight.

7. Cutting strip according to one of the preceding claims, **characterised in that** the hard-material particles are uniformly distributed in the matrix.

8. Cutting strip according to one of the preceding claims, **characterised in that** the hard-material strip (7) has a thickness (8) of 2 to 3.5 mm.

9. Cutting strip according to one of the preceding claims, **characterised in that** the hard-material strip (7) is welded on the cutting body (1) at the side.

10. Cutting strip according to one of the preceding claims, **characterised in that** the hard-material strip (7) has a width (9) of at least 6 mm.

11. Cutting strip according to one of the preceding claims, **characterised in that** the hard-material strip (7) is welded on the cutting body (1) by means of building-up welding.

12. Cutting strip according to one of the preceding claims, **characterised in that** the hard-material strip (7) has an adhesive strength of more than 100 N/mm².

13. Cutting strip according to one of the preceding claims, **characterised in that** the hard-material strip (7) is welded on the cutting body (1) on the upper side.

## Revendications

1. Contre-lame formée d'un corps de contre-lame (1) avec au moins une règle en un matériau dur (7) pourvue d'une arête de coupe (2) qui est soudée au corps de contre-lame (1) et est formée d'une matrice tendre, dans laquelle sont noyées des particules de matériau dur, **caractérisée par le fait que** la proportion en surface des particules de matériau dur avec un diamètre allant de 40 à 160 µm dans une coupe polie de la règle en matériau dur (7) est d'au moins 30%.

2. Contre-lame selon la revendication 1, **caractérisée par le fait que** la matrice présente une dureté de 600 HV maximum, de préférence comprise entre 480 et 580 HV.

3. Contre-lame selon la revendication 1 ou 2, **caractérisée par le fait que** la matrice est formée d'une combinaison de deux ou plusieurs des éléments chimiques nickel, silicium, carbone et bore.

4. Contre-lame selon la revendication 1, 2 ou 3, **caractérisée par le fait que** les particules de matériau dur présentent une dureté supérieure à 1800 HV.

5. Contre-lame selon la revendication 4, **caractérisée par le fait que** les particules de matériau dur sont des carbures fondus de tungstène.

6. Contre-lame selon une des revendications précédentes, **caractérisée par le fait que** la proportion des particules de matériau dur dans la règle en matériau dur (7) est supérieure à 50 % en poids.

7. Contre-lame selon une des revendications précédentes, **caractérisée par le fait que** les particules de matériau dur sont réparties régulièrement dans la matrice.

8. Contre-lame selon une des revendications précédentes, **caractérisée par le fait que** la règle en matériau dur (7) présente une épaisseur (8) comprise entre 2 et 3,5 mm.

9. Contre-lame selon une des revendications précédentes, **caractérisée par le fait que** la règle en matériau dur (7) est soudée latéralement sur le corps de contre-lame (1).

10. Contre-lame selon une des revendications précédentes, **caractérisée par le fait que** la règle en matériau dur (7) a une largeur (9) d'au moins 6 mm.

11. Contre-lame selon une des revendications précédentes, **caractérisée par le fait que** la règle en matériau dur (7) est soudée sur le corps de contre-lame (1) par rechargement.

12. Contre-lame selon une des revendications précédentes, **caractérisée par le fait que** la règle en matériau dur (7) une résistance d'adhérence supérieure à 100 N/mm².

13. Contre-lame selon une des revendications précédentes, **caractérisée par le fait que** la règle en matériau dur (7) est soudée sur la face supérieure du corps de contre-lame (1).
